# FASCICULE DE BREVET EUROPEEN

(11) **EP 2 704 896 B1**
(45) Date de publication et mention de la délivrance du brevet: **06.11.2019**
(21) Numéro de dépôt: 12724299.8
(22) Date de dépôt: 04.05.2012
(51) Int. Cl.: B29C 70/32, B29C 70/02, B29C 70/24, B29C 53/80, B29C 70/30, B29K 307/00, C08K 3/34, C08K 7/10, F02K 9/34, B29K 707/00, B29K 307/04, B29K 105/24, B29K 273/00, B29K 101/10

(54) **PROTECTIONS THERMIQUES OBTENUES PAR PROCEDE D'ENROULEMENT FILAMENTAIRE ET MÉTHODE DE FABRICATION CORRESPONDANTE**
WÄRMESCHUTZ DURCH EIN FASERWICKELVERFAHREN UND ENTSPRECHENDES VERFAHREN
THERMOPROTECTIONS OBTAINED BY A FILAMENT WINDING PROCESS AND CORRESPONDING METHOD OF FABRICATION

(30) Priorité: 06.05.2011 FR 1153896
(43) Date de publication de la demande: 12.03.2014
(73) Titulaire: ROXEL France, 33167 Saint-Medard en Jalles Cedex (FR)
(72) Inventeur: RUMEAU, Nicolas, F-33167 Saint-Medard en Jalles Cedex (FR); CHAMPMARTIN, Alain, F-33167 Saint-Medard en Jalles Cedex (FR); FREYDIER, Christian, F-33167 Saint-Medard en Jalles Cedex (FR)
(74) Mandataire: Collet, Alain
(86) Numéro de dépôt international: PCT/EP2012/058301
(87) Numéro de publication internationale: WO 2012/152721

(56) Documents cités:
- EP-A1- 0 174 886
- EP-A1- 0 742 185
- US-A- 3 449 199
- US-A- 4 220 497
- US-A- 5 876 659

## Description

La présente invention concerne le domaine général des matériaux composites, et plus particulièrement celui de la réalisation de matériaux composites destinés à constituer des revêtements réfractaires à la chaleur. Elle concerne plus particulièrement la réalisation, par la technique d'enroulement filamentaire, de matériaux composites fibreux comprenant une matrice organique renforcée par des particules de matériaux réfractaires tels que des céramiques par exemple.

La recherche dans le domaine aéronautique de performances accrues en termes de propulsion, recherche induite par l'accroissement de la complexité et de la durée des vols effectués par différents vecteurs, induit soit une augmentation de la durée de fonctionnement des propulseurs équipant le vecteur considéré, soit encore une durcissement des conditions de combustion (pression, Température) du carburant, du propergol solide par exemple. Ce durcissement des conditions de fonctionnement nécessitent l'amélioration des performances thermomécaniques des éléments formant les propulseurs, tels que le revêtement de protection thermique de la chambre de combustion et de ses sous ensembles incluant tube rallonge et divergent tuyère.

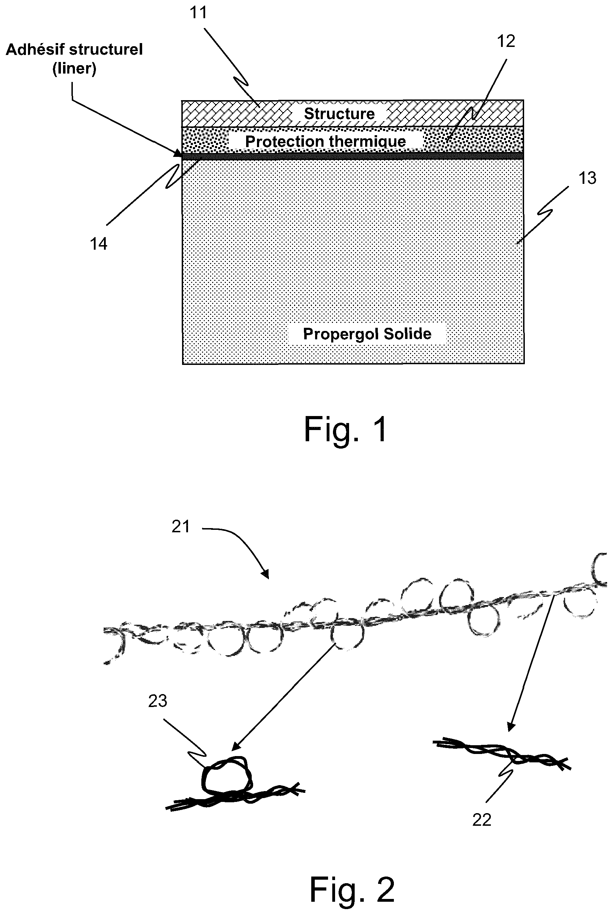

Au cours des dernières années la fonction de protection thermique des chambres de combustion de moteurs à propergol solide a été principalement assurée par la mise en œuvre de matériaux élastomériques ou composites, constitués d'une matrice organique au sein de laquelle sont à la fois intégrés des renforts mécaniques ainsi que des charges réfractaires et endothermiques. La figure 1 présente schématiquement la structure d'un moteur à propergol solide dont la paroi interne 11 est recouverte d'un revêtement de protection thermique 12 placé entre la paroi et le combustible 13, le revêtement étant séparé du combustible par une couche de matériau structurel assurant notamment l'adhérence du propergol, couche encore appelée "liner" selon une terminologie anglo-saxonne.

L'objet principal de la protection thermique ainsi élaborée est de contrôler les contraintes mécaniques puis le flux thermique imposés au corps de propulseur au cours de la phase de combustion du propergol solide. Celle-ci est donc normalement conçue pour assurer la protection des matériaux structuraux du propulseur au cours de son fonctionnement, en particulier lorsque celui-ci est de très longue durée. Elle est par ailleurs conçue de façon à ne pas perturber le fonctionnement du propulseur.

Par suite, une telle protection thermique doit généralement présenter les caractéristiques techniques suivantes:
- compatibilité chimique et pyrotechnique avec les matériaux énergétiques (propergol) constituant le chargement du moteur, les gaz de combustion, et les particules (espèces chimiques) produites au cours du fonctionnement;
- excellente résistance mécanique, garantissant en particulier la fiabilité requise concernant le fonctionnement du propulseur,
- excellente résistance aux chocs thermiques se produisant durant les phases de transport et de stockage principalement, et aux hautes températures, durant les phases de fonctionnement,
- résistance à l'érosion générée par la circulation des gaz de combustion lors du fonctionnement,
- limitation du flux thermique transmis vers les matériaux structuraux tels que la structure externe du propulseur.

Pour réaliser un revêtement présentant ces caractéristiques, il est connu d'utiliser des matériaux élastomères, généralement chargés au moyen de renforts mécaniques et de charges réfractaires. On connait en particulier de la demande de brevet publiée sous la référence EP0174886, un matériau composite comprenant une matrice organique thermodurcissable et un renfort constitué de fibres minérales ou céramiques.

Il est connu de réaliser des éléments de protection thermique à partir d'une matrice silicone (Poly-Di-Methyl-Siloxane) au sein de laquelle ont été incorporées des fibres de carbone courtes ainsi que des charges réfractaires du type carbure de silicium, cette combinaison conférant à la protection ainsi réalisée des propriétés formant un excellent compromis en ce qui concerne l'obtention des caractéristiques citées précédemment.

L'avantage de la protection ainsi réalisée réside dans le fait que l'utilisation d'une matrice silicone permet d'assurer, sur un large domaine de températures, à la fois d'excellentes caractéristiques mécaniques de la protection, résultant d'une capacité d'élongation élevée, une bonne adhérence sur la paroi du propulseur, moyennant cependant la réalisation préalable d'un traitement de surface adapté, ainsi qu'une stabilité thermique satisfaisante et un bon comportement et une résistance significative en atmosphère oxydante.

Pour réaliser un revêtement présentant de telles caractéristiques, il est également connu de procéder par bobinage de fibres sur un mandrin de diamètre approprié, le mandrin présentant des picots positionnés perpendiculairement à sa surface; les fibres étant préalablement imprégnées, au sein d'une barbotine, par une résine organique jouant dans le matériau final la fonction de matrice. Un tel procédé, plus connu de l'homme du métier sous l'acronyme "BRAS", permet de réaliser un revêtement présentant une texture multi directionnelle (3D dans le cas présent) qui confère à la protection thermique ainsi élaborée de meilleures performances mécaniques dans le sens longitudinal, et une très bonne tenue globale de la scorie produite durant la combustion. Il possède cependant l'inconvénient d'être d'une mise en œuvre complexe et longue, ce qui rend coûteuse la réalisation du revêtement.

Un but de l'invention est de proposer une solution pour réaliser de nouvelles protections thermiques comportant une matrice organique renforcée par des particules céramiques et un renfort fibreux bobiné, dont la mise en forme finale peut être obtenue par mise en œuvre d'un procédé d'enroulement filamentaire simplifié, conférant toutefois au matériau bobiné une texture multidirectionnelle.

A cet effet l'invention a pour objet un matériau composite et un procédé pour réaliser ledit matériau composite.

Selon l'invention, le matériau composite est formé par réticulation d'une matrice organique thermodurcissable imprégnée dans un renfort constitué de fibres minérales ou de fibres de céramiques, la matrice étant constituée majoritairement d'une résine liquide à laquelle sont adjoints des charges de renfort réfractaires.

Le renfort fibreux est constitué par un fil présentant sur toute sa longueur des fibres formant des boucles protubérantes. Il est réalisé en bobinant le fil sur un mandrin de diamètre et de forme appropriés et en imprégnant le fil bobiné de matrice organique, de façon à former une préforme bobinée imprégnée de matrice organique présentant la géométrie finale voulue. La préforme bobinée est ensuite réticulée en étuve de façon à former le matériau composite. Le bobinage de la préforme est réalisé de façon à ce que, compte tenu de la composition de la matrice organique et de la nature et de la constitution du fil formant le renfort fibreux, la matrice organique et le renfort fibreux soient présents dans le matériau obtenu, après réticulation en étuve, dans les proportions volumiques suivantes:
- entre 65% et 75% de matrice organique,
- entre 25% et 35% de renfort fibreux

La composition selon l'invention comporte ainsi une matrice organique thermodurcissable composée d'une résine liquide chargée de particules réfractaires ainsi qu'un renfort fibreux constitué par un fil formé de fibres, certaines fibres formant des boucles protubérantes sur toute la longueur du fil. La matrice organique thermodurcissable imprégnant le renfort fibreux.

Selon un mode de réalisation préféré, le renfort fibreux est constitué de fibres de silice (SiO2) ou de carbure de silicium (SiC).

Selon un autre mode de réalisation préféré, le renfort fibreux en silice présente un nombre de bouclettes par mètre linéaire compris entre 140 et 200.

Selon une caractéristique de réalisation particulière, les bouclettes du renfort fibreux présentent un diamètre moyen de 5 mm.

Selon l'invention, la matrice organique chargée est un mélange comportant une résine phénolique aqueuse et des particules réfractaires; les proportions massiques entre la résine phénolique et les charges réfractaires étant comprises dans les plages suivantes:
- 40 à 60% de résine phénolique;
- 60 à 40% de charges réfractaires.

Selon un mode de réalisation préféré, la matrice organique chargée comporte, en masse, 50% de résine phénolique et 50% de charge réfractai re.

Selon une caractéristique de réalisation particulière, la résine phénolique est une résine liquide de type Résol.

Selon une autre caractéristique de réalisation particulière, les charges réfractaires sont constituées de carbure de silicium.

Selon un mode de réalisation préféré, les charges réfractaires en carbure de silicium sont de forme sensiblement sphérique et présentent un diamètre médian compris entre 12 µm et 20 µm.

Selon un mode de réalisation particulier le carbure de silicium comporte du bore en tant qu'agent fondant.

Selon un mode de réalisation particulier, la matrice organique chargée est un mélange comportant une résine et des particules réfractaires, la résine étant une huile silicone dont le mode de polymérisation est du type poly addition.

Le procédé selon l'invention est mis en œuvre alors que les outillages et des matières premières ont été préalablement portés à une température ambiante comprise entre 20°C et 30°C. Il comporte principalement les étapes suivantes :
- une première étape de réalisation du mélange, ou "barbotine", entre la résine et la charge réfractaire, le mélange étant réalisé à la température ambiante;
- une deuxième étape d'enroulement filamentaire, étape au cours de laquelle le renfort fibreux, de structure filaire, est bobiné, suivant un cycle de bobinage préétabli, sur le mandrin en rotation pendant qu'il est imprégné de la "barbotine"; la dépose de la "barbotine" se faisant de manière continue. L'enroulement, réalisé à la température ambiante, produit une préforme en fil bobiné imprégnée de barbotine;
- une troisième étape de réticulation de la préforme imprégnée de "barbotine", la réticulation étant réalisée suivant un enchainement de cycles de montée en température produisant un accroissement progressif de la température du matériau. La troisième étape est terminée par une phase durant laquelle on laisse le matériau réticulé retourner de lui-même à la température ambiante;
- une quatrième étape d'usinage à sec permettant à la fois de libérer la pièce réticulée du mandrin et d'obtenir les dimensions voulues pour l'élément de matériau composite.

Selon un mode de mise en œuvre préféré du procédé selon l'invention, les outillages et les matières premières sont portés à la température ambiante et maintenus à cette température pendant une durée de stabilisation minimale d'environ 20 heures.

Selon un mode de mise en œuvre préféré, la première étape est réalisée au moyen d'un mélangeur turbine configuré pour obtenir un mélange résine-charges réfractaires dont la viscosité brookfield est comprise sur entre 8000mPa·s et 11000mPa·s.

Selon l'invention, la dépose de la "barbotine" sur le renfort filaire bobiné est réalisée de manière continue et de manière excédentaire au moyen d'une pompe péristaltique raccordée à un réservoir contenant la "barbotine" préparée.

Selon une caractéristique particulière du procédé selon l'invention, l'étalement de la "barbotine" à la surface du renfort filaire bobiné est associé à l'application d'une légère pression au moyen d'un pinceau.

Selon un mode de mise en œuvre préféré du procédé selon l'invention, la deuxième étape d'enroulement filamentaire comporte les opérations préalables suivantes:
- Préparation de la bobineuse et positionnement du mandrin et des bobines de renfort fibreux;
- réglage de la tension fil formant le renfort fibreux, à une valeur permettant d'assurer l'essorage du renfort filaire en cours de bobinage de façon à évacuer la barbotine déposée en excès sur le renfort filaire, sans risquer de rompre le renfort filaire;
- réglage de la vitesse maximale de bobinage à une valeur permettant une imprégnation complète du renfort bobiné par la "barbotine".

Selon un mode de mise en œuvre préféré, la tension appliquée au renfort filaire est comprise entre 1,4 et 1,8 DaN, et la vitesse de rotation du mandrin est d'environ 32 tours par minute.

Selon une caractéristique particulière du procédé selon l'invention, la tension appliquée au renfort filaire (21) est de 1,6 Da.N.

Selon l'invention, l'excédant de "barbotine" récupéré par l'essorage consécutif à la tension appliquée au fil constituant le renfort filaire est réintroduit dans le réservoir de "barbotine".

Selon un mode de mise en œuvre préféré du procédé selon l'invention, la troisième étape de réticulation en température de la préforme filaire, est réalisée selon le cycle suivant:
- application d'une première rampe de température comprise entre 20°C ^{± 5°C} et 60°C ^{± 5°C} durant les 2 premières heures ^{± 5 min};
- application d'une seconde rampe de température comprise entre 60°C ^{± 5°C} et 120°C ^{± 5°C} durant les 42 heures ^{± 5 min} suivantes;
- application d'une troisième rampe de température comprise entre 120°C ^{± 5°C} et 140°C ^{± 5°C} sur une durée de 23 heures ^{± 5 min};
- maintien durant 2 heures ^{± 5 min} à la température de stabilisation de 140°C ^{± 5°C};
- retour à la température ambiante suivant le cycle d'inertie naturelle du matériau;

La troisième étape est réalisée alors que la préforme filaire est maintenue en rotation sur le mandrin.

Selon un mode de mise en œuvre particulier le procédé selon l'invention comporte également une étape complémentaire de surbobinage.

Selon une caractéristique particulière le matériau surbobiné employé est constitué d'un fil de fibres organiques, pré-imprégné d'une résine chimiquement compatible de celle employée pour la réalisation du matériau composite proprement dit.

Selon une autre caractéristique particulière, le matériau surbobiné employé est constitué d'un fil de fibres de carbone, pré-imprégné d'une résine phénolique.

L'invention permet avantageusement de produire un revêtement qui satisfait des exigences sans cesse croissantes en termes de performances mécaniques et thermiques, en associant à une formulation spécifique de matériau et processus de réalisation permettant d'obtenir de manière avantageusement simple une texture à renfort multidirectionnel.

Les caractéristiques et avantages de l'invention seront mieux appréciés grâce à la description qui suit, description qui s'appuie sur les figures annexées qui représentent:
- la figure1, Une illustration présentant l'agencement des différents éléments logés à l'intérieur d'un corps de propulseur;
- la figure 2, une illustration présentant la structure du fil constituant le renfort fibreux entrant dans la composition du matériau composite selon l'invention;

- la figure 3, l'organigramme des différentes étapes du procédé de réalisation du matériau composite selon l'invention;
- la figure 4, Une illustration de la mise en œuvre du procédé de fabrication du matériau composite selon l'invention;
- la figure 5, un chronogramme de principe décrivant les différentes phases de l'étape de réticulation du procédé de fabrication du matériau composite selon l'invention;
- la figure 6, un chronogramme partiel décrivant les diverses façons de réaliser la deuxième phase de l'étape de réticulation;
- la figure 7, l'illustration d'un exemple d'élément de protection pouvant être réalisé en matériau composite selon l'invention.

L'invention décrite ci-après permet de répondre à l'exigence d'augmentation des performances mécaniques et thermiques des revêtements de protection pouvant équiper un propulseur. Elle associe l'utilisation d'une composition spécifique d'éléments et un procédé de réalisation du matériau composite avantageusement simple, permettant cependant d'obtenir un renfort à texture multidirectionnelle.

Le matériau selon l'invention est réalisé à partir d'une composition qui comporte principalement une matrice organique chargée et renforcée par un renfort fibreux constitué de fibres minérales ou céramiques.

La matrice organique est préférentiellement constituée par une résine phénolique (aqueuse). Une telle résine, de faible masse moléculaire, qui nécessite généralement d'être réticulée à une température élevée, de l'ordre de la centaine de degrés C, présente l'avantage d'apporter au matériau composite ainsi formulé une excellente résistance thermique. En effet, l'exposition à la chaleur d'une telle résine produit, par un phénomène de transformation chimique très endothermique, une couche carbonée (coke) protectrice qui fait obstacle à la progression de cette chaleur et renforce la tenue thermique et mécanique du matériau. En outre, en se consumant, une telle résine ne produit avantageusement pas de fumées toxiques.

Dans un mode de mise en œuvre préféré de l'invention, la matrice organique est constituée de résine de type Résol (résine phénolique liquide) présentant la caractéristique de générer un taux de résidus de pyrolyse supérieur ou égal à 50%. Une telle résine correspond par exemple à la variété de résine RA101 fabriquée par la société Rhodia.

Dans un mode de mise en œuvre alternatif, la matrice organique peut consister en une résine polymérique de type résine silicone fonctionnant sur un mode de polymérisation de type poly addition qui assure également un résidu de pyrolyse supérieur à 50%. Différents types d'huiles silicones auxquelles il est ajouté un certain pourcentage de charges peuvent ainsi être utilisées pour constituer la matrice organique. Ainsi, par exemple, la matrice organique peut consister en une résine poly-di-méthyl-siloxane (PDMS), et plus particulièrement en une résine de type RTV 630 commercialisée par la société General Electric qui présente un caractère thixotrope obtenu par introduction de charges (RTV étant l'acronyme de l'expression anglosaxonne "Room Temperature Vulcanization").

Ce mode de mise en œuvre alternatif est en particulier bien adapté à la réalisation d'éléments de revêtement massifs, réalisation qui nécessite une maitrise du processus de réticulation de la résine sur des intervalles de temps plus longs. La résine silicone chargée est alors associée à un agent retardateur de type PT67 commercialisé par la société Wacker chemie, qui ralentit le processus de réticulation de la résine.

Selon l'invention, la matrice organique comporte une proportion donnée de particules de matériau réfractaire, de la céramique par exemple. Ces particules contribuent avantageusement à conférer à la matrice non seulement une résistance à la température mais aussi une aptitude à retarder la progression du transfert thermique pendant la durée d'exposition à une forte température.

La matrice organique, ainsi formée d'un mélange résine-charge réfractaires, est encore dénommée barbotine dans le cadre du procédé de réalisation du matériau composite.

Le matériau constituant les charges réfractaires employées dans le cadre de l'invention est préférentiellement du carbure de silicium, éventuellement allié à un agent fondant, tel que du Bore par exemple. Cependant, des matériaux du type Al₂O₃, SiO₂, ZrO₂, bien qu'étant moins performants sur le plan thermique, peuvent également être employés, en particulier pour répondre aux besoins de certaines applications spécifiques.

Le tableau 1 ci-après présente les caractéristiques comparatives de différents matériaux pouvant être utilisés pour constituer les charges réfractaires.

**Tableau 1 : caractéristiques physiques de différents matériaux utilisés pour réaliser des fibres et renforts réfractaires**

| **Caractéristiques** | **Carbone** | **Carbure de Silicium** | **Silice** |
|---|---|---|---|
| Température de Fusion (°C) | > 2000 | 2800 | 1700 |
| Température seuil de perte des caractéristiques (°C) | 400 (milieu oxydant) 2500 (milieu neutre) | 1400 | 900 |
| Conductivité (W/m.K) | 100 | 25 | 1 à 2 |
| Densité | 1,7 | 3,2 | 2,2 |
| Chaleur spécifique (J/Kg.K) | 840 | 920 | 960 |

Selon l'invention, les proportions massiques entre résine phénolique et charges réfractaires dans la matrice organique, sont établies comme suit:
- Résine phénolique: 40% à 60%.
- Charges réfractaire (SiC préférentiellement) : 60% à 40% .

Le ratio entre la résine phénolique et les charges réfractaires adopté dépend, entre autre, des caractéristiques granulométriques (diamètre médian D50) des particules de matériau réfractaire. Cependant, dans une forme de réalisation préférée, la matrice organique comporte des proportions sensiblement égales de résine et de particules réfractaires, l'utilisation d'un ratio 50/50 permettant l'obtention d'une barbotine dont les caractéristiques rhéologiques sont les plus appropriées à la mise en œuvre du procédé de fabrication du matériau composite selon l'invention décrit dans la suite du document.

Il est à noter que selon l'invention les proportions massiques des deux éléments sont déterminées de façon à ce que l'apport de charges réfractaires dans la résine soit le plus important possible, compte tenu cependant des limites de miscibilité de la charge, de la viscosité maximale admissible pour l'utilisation de la matrice et de la nécessité d'éviter une apparition trop rapide de phénomènes de décantation des particules.

Selon l'invention le renfort fibreux constituant la composition à la base du matériau composite selon l'invention est un renfort fibreux architecturé, constitué de mèches en forme de bouclettes associées à des mèches en forme de fibrilles unidirectionnelles de même nature ou de nature différente.

Selon le mode de réalisation adopté, ce renfort fibreux peut être de nature organique (carbone, kevlar), céramique (carbure de silicium) ou encore minérale (Silice). La figure 2 présente de manière schématique la structure originale du renfort fibreux entrant dans la composition du matériau composite selon l'invention, renfort constitué par un fil 21 formé de fibrilles 22 unidirectionnelles entremêlées entre elles ou avec des fibrilles 23 formant des bouclettes. Cette structure "en fil à bouclettes" présente l'avantage de produire un renfort de forme filaire présentant, outre son caractère linéaire de fil, une certaine expansion radiale définie par le diamètre moyen des fibrilles en forme de bouclettes. Cette expansion radiale confère avantageusement une structure, une texture, tridimensionnelle au renfort, les bouclettes constituant un enchevêtrement de fibres entre deux couche de fil bobiné.

Selon l'invention le diamètre et le nombre des bouclettes sont définis en fonction de l'épaisseur de la pièce de matériau composite à réaliser.

Dans un mode de réalisation préféré, on utilise préférentiellement un renfort fibreux constitué par un fil à bouclettes présentant principalement les caractéristiques suivantes:
- Diamètre moyen des bouclettes: ≈ 5 mm,
- Nombre de bouclettes par mètre: entre 140 et 200 (160 de préférence)
- Capacité de résistance à une mise en tension: ≥ 1,6 DaN.
- Application d'un traitement d'ensimage au niveau de l'âme et des bouclettes.

Un renfort fibreux présentant de telles caractéristiques peut par exemple être réalisé à partir d'un fil à bouclettes en fibres de silice commercialisé par la société Hexcel Fabrics sous la référence "fil bouclette CB26".

Selon l'invention, les proportions volumiques entre la matrice organique et le renfort fibreux sont établies de façon à ce que le renfort fibreux représente de 25 à 35% du volume du matériau final.

En outre les proportions massiques de matrice organique et de renfort fibreux sont préférentiellement fixées à 65% pour la matrice et à 35% pour le renfort, afin d'obtenir les performances mécaniques et thermiques souhaitées.

La composition décrite dans le texte qui précède est utilisée pour réaliser, pour fabriquer, le matériau composite à renfort fibreux selon l'invention.

Dans la suite du texte on décrit le procédé mis en œuvre pour réaliser le matériau. Ce procédé étant particulièrement adapté à la composition décrite précédemment.

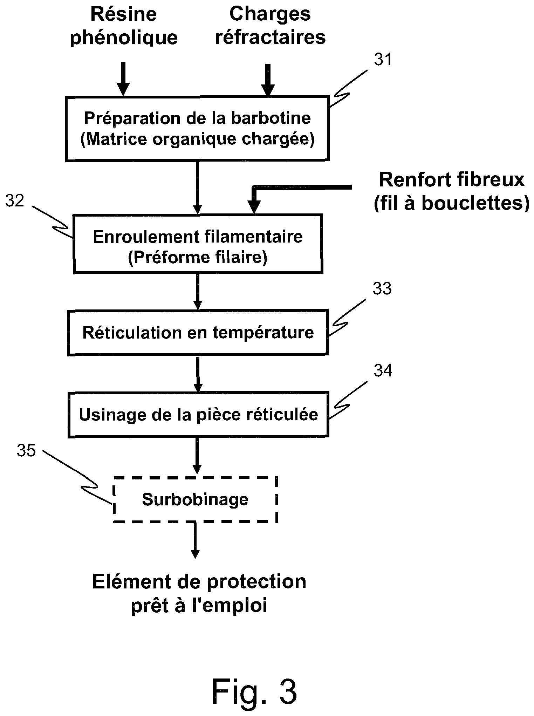

Le procédé pour réaliser le matériau composite selon l'invention présente principalement, comme l'illustre l'organigramme de la figure 3, les étapes suivantes:
- une première étape 31 de réalisation d'une "barbotine" (matrice organique) constituée par le mélange résine-charges réfractaires décrit précédemment;
- une deuxième étape 32 "d'enroulement filamentaire" durant laquelle on enroule sur une forme, un mandrin cylindrique par exemple, un fil à bouclette, tel que celui décrit précédemment, le fil étant enduit de barbotine pendant son enroulement sur le mandrin. Le diamètre et la forme du mandrin dépendent ici des dimensions de la pièce à protéger, le diamètre intérieur du corps du propulseur par exemple.

- une troisième étape 33, durant laquelle on réalise la réticulation, à la température requise par la résine employée, de la pièce bobinée enduite de barbotine, réalisée durant la deuxième étape;
- une quatrième étape 34 durant laquelle on réalise un usinage à sec de la pièce réticulée;

Selon les applications considérées la quatrième étape peut être suivie d'un cinquième étape, optionnelle durant laquelle on réalise un surbobinage sur la pièce réticulée.

Selon l'invention, les première et deuxième étapes, sont nécessairement mises en œuvre dans une ambiance contrôlée d'un point de vue thermique.

Par ailleurs, de manière préférentielle, les ingrédients et outillages dédiés sont préalablement maintenus pendant une durée minimale d'environ 20 heures précédant la réalisation du matériau, à une température comprise dans une plage de températures θ comprise entre 20°C et 30°C.

La première étape 31 de réalisation de la "barbotine" consiste à effectuer le mélange résine-charges réfractaires.

Selon l'invention, cette étape est réalisée préférentiellement au moyen d'un mélangeur turbine, ce type de mélangeur étant choisi, de préférence, pour ses performances en termes de vitesse de rotation. Elle comporte, par ailleurs les opérations suivantes:
- une opération de pesée de la résine phénolique et d'introduction de cette résine dans le bol du mélangeur;
- une opération d'ajout à la résine phénolique d'une quantité de charges réfractaires correspondant, compte tenu de la quantité de résine phénolique introduite dans le bol du mélangeur, aux proportions spécifiées précédemment concernant la matrice organique;
- une opération de mélange proprement dit durant laquelle le mélangeur est mis en marche. Cette opération de mélange est d'une durée d'environ 30 (± 5 minutes).

Dès la fin d'élaboration du mélange, on sera réalise une mesure de viscosité (Brookfield) de la "barbotine" ainsi constituée, de façon à contrôler que celle-ci présente bien une viscosité comprise dans la plage de 8000 à 11000 mPa·s pour la plage de température de travail θ.

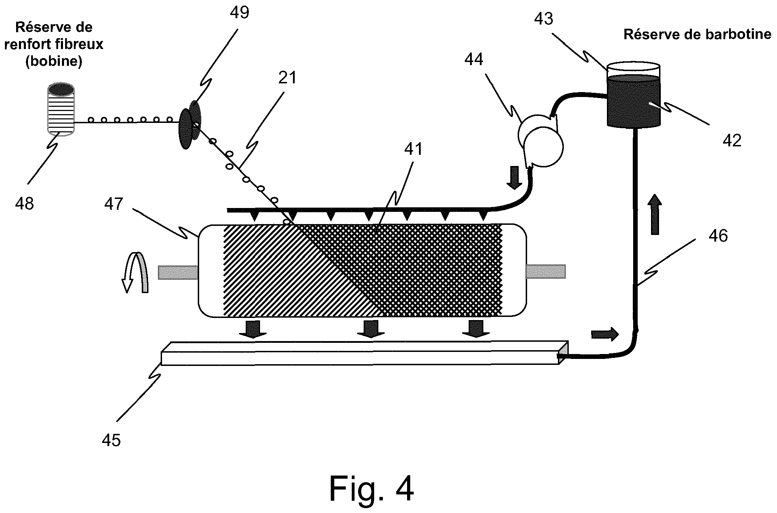

En fin de première étape la "barbotine" ainsi élaborée est ensuite transférée, comme l'illustre la figure 4, vers un réservoir 43 relié à une pompe de dosage 44, une pompe péristaltique, dont la mise en œuvre est nécessaire pour réaliser la seconde étape 32 d'enroulement filamentaire.

La deuxième étape 32 du procédé selon l'invention consiste à enrouler le fil à bouclette sur une forme, un mandrin par exemple, en imprégnant le fil de "barbotine" au fur et à mesure de son enroulement sur le mandrin, de façon à réaliser une préforme filaire 41 du matériau composite. Cette étape comporte une opération préalable de préparation de la bobineuse, durant laquelle on contrôle en particulier le positionnement (alignement) du mandrin 47 et des bobines de fil de renfort 21.

Les règles de l'art en terme d'enroulement filamentaire sont utilisées afin d'assurer une dépose stable du renfort fibreux sur la forme (le mandrin). Ces règles, bien connues de l'homme du métier, ne sont pas détaillées ici.

Selon l'invention, comme l'illustre la figure 4, le fil à bouclette 21 est préférentiellement conditionné sous forme de bobines 48. Durant son enroulement sur le mandrin 47, il est imprégné de barbotine 42 de manière continue. L'imprégnation de "barbotine" est réalisée, par gravité, de manière excédentaire au moyen d'une pompe péristaltique 44 raccordée à un réservoir de barbotine 43, contenant la "barbotine" préparée à l'issue de la première étape 31 du procédé.

Selon l'invention, et compte tenu de la viscosité de la "barbotine" en particulier, la vitesse maximale de bobinage est fixée à environ 32 tours par minute, vitesse qui correspond au temps nécessaire pour garantir une imprégnation complète du fil à bouclettes 21 bobiné par la "barbotine" 42.

Selon l'invention également, la tension du fil bouclette 21 durant l'étape 32 de d'enroulement filamentaire est maintenue, par des moyens de positionnement et de tension 49, à une valeur comprise entre 1,4 et 1,8 DaN. Une tension comprise dans une telle plage permet avantageusement d'assurer l'essorage du fil à bouclette 21 bobiné sur le mandrin 47 de façon à éliminer l'excès de barbotine imprégnant le fil bobiné, ainsi que d'assurer la maitrise de l'épaisseur du matériau réalisé, tout en en évitant de risquer la casse du fil 21 sous l'action d'une tension trop élevée. Idéalement, la tension appliquée est sensiblement égale à 1,6 Da.N.

Comme l'illustre la figure 4, l'excédant de "barbotine", produit par l'essorage induit par la tension du fil, est récupéré par des moyens 45 et réintroduit dans son conditionnement (le réservoir 43) au moyen d'un circuit de récupération 46 de façon à être réutilisé pour l'imprégnation du fil 21.

Selon un mode de mise en œuvre particulier, non illustré par la figure, l'étalement et l'imprégnation de la "barbotine" sur toute la largeur de fil bobinée sur le mandrin sont ponctuellement favorisées au cours du bobinage par application manuelle ou automatique d'une légère pression au moyen d'un pinceau par exemple, ou encore d'une brosse formée de poils de pure soie, de largeur 50 mm

A l'issue de la deuxième étape 32 du procédé selon l'invention on obtient ainsi une préforme bobinée 41 imprégnée de "barbotine" 42 qui est prête pour l'étape suivante de réticulation.

La troisième étape 33 du procédé selon l'invention constitue la phase au cours de laquelle la préforme bobinée 41, c'est à dire la matrice organique renforcée par le fil à bouclette 21 et mise en forme par bobinage sur le mandrin 47, subit une opération de réticulation (durcissement) qui confère au matériau composite ainsi réalisé les propriétés mécaniques recherchées ainsi que la protection thermique souhaitée.

Comme mentionné précédemment cette réticulation est réalisée à température élevée, de préférence en plaçant la préforme bobinée 41 montée sur le mandrin 47 dans enceinte climatique (une étuve) ventilée, équipée de moyens assurant une rotation sur lui-même du mandrin sur lequel est montée la préforme bobinée 41.

L'opération de réticulation proprement dite est précédée d'une opération de conditionnement préalable de la préforme bobinée 41, conditionnement durant lequel cette dernière est maintenue en rotation à température ambiante pendant une durée de 8 à 12 heures.

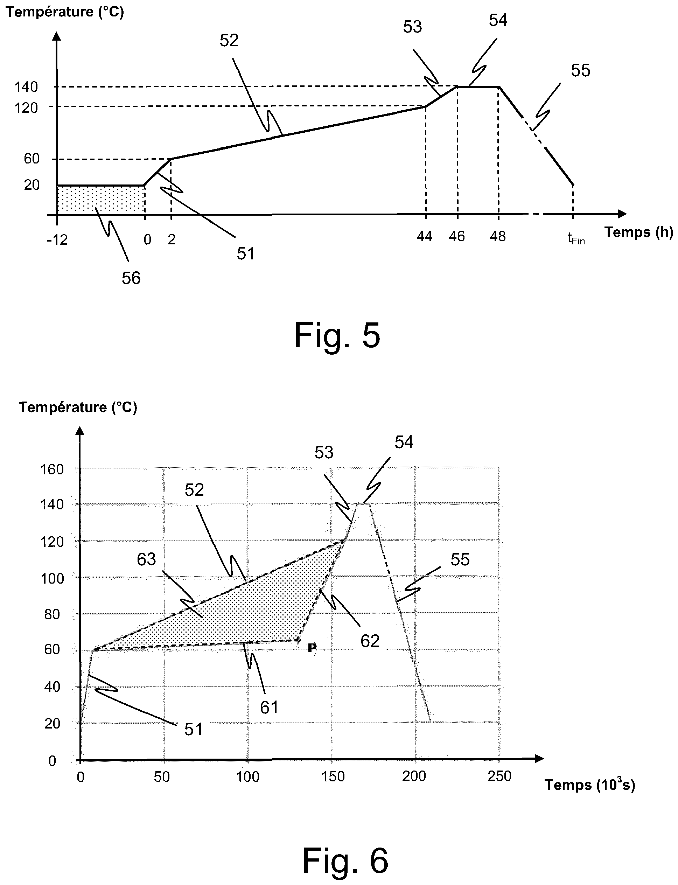

Selon l'invention, le cycle de réticulations appliqué à la préforme bobinée 41 se déroule préférentiellement en cinq phases comme l'illustre le graphe de la figure 5:
- une première phase, qui suit l'opération de conditionnement préalable 56, durant laquelle on applique, durant sensiblement deux heures (plus ou moins 5min), une rampe de température 51 comprise entre 20°C ^{± 5°C} et 60°C^{± 5°C},
- une deuxième phase durant laquelle on applique, durant sensiblement 42 heures (plus ou moins 5min), une seconde rampe 52 de température comprise entre 60°C ^{± 5°C} et 120°C ^{± 5°C};
- une troisième phase durant laquelle on applique, durant sensiblement 2 heures (plus ou moins 5min), une troisième rampe de température 53 comprise entre 120°C ^{± 5°C} et 140°C ^{± 5°C};
- une quatrième phase de stabilisation du matériau durant laquelle on maintient le matériau à une température constante 54, de 140°C ^{± 5°C}, durant sensiblement 2 heures (plus ou moins 5min);
- une cinquième phase, durant laquelle on laisse la température 55 du matériau réticulé retourner à la température ambiante, dont la durée est fonction de l'inertie thermique naturelle du matériau.

Selon l'invention, la deuxième phase du processus de réticulation, qui correspond à l'application d'une longue rampe de température 52, d'environ 42h, peut, dans une forme de mise en œuvre particulière illustrée par le graphe de la figure 6, être découpée en deux parties 61 et 62, afin de tenir compte du seuil d'écoulement de la résine qui caractérise le moment où la matrice organique (la "barbotine") est figée sur la préforme bobinée et ainsi limiter les effets sur la structure des contraintes internes induites par la réticulation en particulier lorsque la polymérisation ne s'effectue que par la surface. Durant cette phase, le cycle thermique peut alors décrire deux segments 61 et 62 compris dans l'aire triangulaire 63.

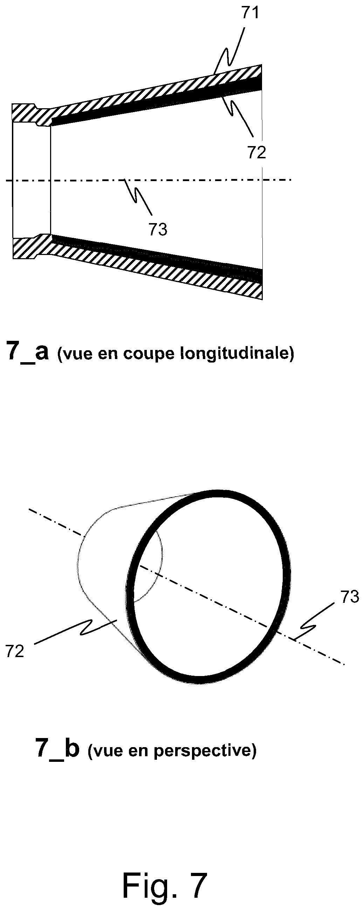

La quatrième étape 34 du procédé selon l'invention constitue quant à elle la phase au cours de laquelle on réalise une opération finale d'usinage à sec du matériau réalisé, de façon à lui conférer le diamètre externe et la longueur recherchés. On peut ainsi obtenir, comme l'illustrent les vues 7_a et 7_b de la figure 7, un élément de protection 72 en matériau composite qui épouse de manière optimale la paroi 71 dont il est chargé d'assurer la protection, la paroi d'un corps de propulsion dans l'exemple de la figure 7.

Il est à noter qu'un élément de protection tel que celui illustré par la figure 7 peut par exemple être réalisé en réalisant une préforme filaire par bobinage sur un mandrin conique.

Les caractéristiques physiques et thermomécaniques du matériau composite ainsi obtenu sont présentées dans le tableau 2 ci-après.

**Tableau 2 : plages des caractéristiques d'un matériau composite selon l'invention**

| Performances mesurées | Matériau décrit dans l'invention |
|---|---|
| Diffusivité thermique (a) (mm²/s) | 0,4 à 0,7 entre 20°C et 1000°C |
| Chaleur spécifique (Cp) (J/g.K) | 0,8 à 1,4 entre 20°C et 1000°C |
| Allongement (%) | 0,26 ± 0,01 |
| Densité | 1,7 ± 0,1 |
| Module d'Young (Mpa) | 11000 ±1000 |

Il est à noter que, suivant les besoins des applications finales envisagées, la dernière étape du procédé selon l'invention peut être suivie d'une étape complémentaire 35 de sur-bobinage appliquée à la protection thermique préalablement élaborée. Cette opération de sur-bobinage pourra être opérée au moyen d'un renfort filaire préalablement imprégné d'une résine chimiquement compatible de celle employée pour la réalisation du matériau composite, de préférence une résine phénolique, les fibres du renfort filaire apportant une meilleure résistance mécanique longitudinale à la pièce finale. Le fil est ici un fil en fibre de carbone.

Il est également à noter que, suivant les besoins des applications finales envisagées, la dernière étape du procédé selon l'invention peut comporter une opération consistant à combler les porosités ouvertes présentes sur la surface interne du matériau composite, par exemple au moyen d'un "gel coat".

La suite de la description présente, à titre d'illustration de la présente invention, deux exemples de matériaux composites correspondant à l'invention.

Un premier exemple de mise en œuvre de l'invention consiste en un matériau composite réalisé à partir d'une "barbotine" présentant une composition en masse égale à 50% de Résine Phénolique RA101 et 50% de Carbure de silicium 11m²/g.

Après homogénéisation du mélange, la barbotine ainsi composée, présentant une viscosité de 8000 à 11000 mPa·s est transférée vers l'installation de bobinage où elle est déposée de manière continue et excédentaire sur un mandrin métallique autour duquel il est procédé à un enroulement filamentaire de renforts fibreux de silice, ces derniers formant un fil présentant des mèches bouclettes à raison de 160 boucles par mètre linéaire de fil.

Dans ce premier exemple le matériau composite finalement obtenu après réticulation, par mise en œuvre du procédé décrit précédemment, présente un ratio volumique matrice/renfort fibreux 40/40, le reste du volume occupé par le matériau (20% du volume) étant constitué par la porosité naturelle du matériau.

Le tableau 3, ci-après, présente les caractéristiques thermodynamiques d'un tel élément de matériau formant une protection thermique la protection thermique d'épaisseur 7mm, de diamètre 350mm et de longueur 1m, caractéristiques mesurées au cours d'une campagne d'essai

**Tableau 3 : caractéristiques du matériau du premier exemple de réalisation décrit précédemment.**

| **Performances mesurées** | **Exemple 1** |
|---|---|
| Diffusivité thermique (a) (mm²/s) | 0,4 à 0,7 entre 20°C et 1000°C |
| Chaleur spécifique (Cp) (J/g.K) | 0,8 à 1,4 entre 20°C et 1000°C |
| Allongement (%) | 0,26 ± 0,01 |
| Densité | 1,7 ± 0,1 |
| Module d'Young (Mpa) | 11000 ±1000 |
| % Erosion suivant essai moteur (φ = 350 mm) | 0 mm |

Un second exemple de mise en œuvre de l'invention consiste en un matériau composite formant une variante PDMS de protection thermique élaborée au moyen du procédé d'enroulement filamentaire tel que décrit précédemment. La matrice organique consiste ici en une résine polymérique de type résine silicone fonctionnant sur un mode de polymérisation de type poly addition. Le matériau est ici réalisé à partir d'une "barbotine" présentant une composition en masse égale à 110 parties pondérales de Résine silicone de type RTV630 et 10 parties pondérales de charges de Carbure de silicium Orkla

Après homogénéisation du mélange, la barbotine, présentant une viscosité de 50000 mPa.s est transférée vers l'installation de bobinage où elle est déposée, en voie humide, de manière continue et excédentaire sur un mandrin autour duquel il est procédé à un enroulement filamentaire de renforts fibreux de silice, ces derniers formant un fil présentant des mèches bouclettes à raison de 160 boucles par mètre linéaire de fil.

Dans ce second exemple le matériau composite finalement formé, après mise en œuvre du procédé décrit précédemment, présente après réticulation à 65°C un ratio volumique matrice/renfort fibreux 60/40,

Le tableau 4, ci-après, présente les caractéristiques thermodynamiques d'un tel élément de matériau formant une protection thermique la protection thermique d'épaisseur 7mm, de diamètre 100mm et de longueur 0,3m, caractéristiques mesurées au cours d'une campagne d'essai

**Tableau 4 : caractéristiques du second exemple de réalisation décrit précédemment.**

| **Performances mesurées** | **Exemple 2** |
|---|---|
| Diffusivité thermique (a) (mm²/s) | 0,15 < a < 0,9 entre 20°C et 1000°C |
| Chaleur spécifique (Cp) (J/g.K) | 0,5 < Cp < 2 entre 20°C et 1000°C |
| Allongement (%) | 8 |
| Densité | 1,8 |
| Module d'Young (Mpa) | 85 |
| % Erosion suivant essai moteur (φ = 100 mm) | 0 mm |

## Revendications

1. Un matériau composite (12) formé par réticulation d'une matrice organique thermodurcissable imprégnée dans un renfort constitué de fibres minérales ou de fibres de céramiques, la matrice étant constituée majoritairement d'une résine liquide à laquelle sont adjoints des charges de renfort réfractaires,
**caractérisé en ce que** le renfort fibreux est constitué par un fil (21) présentant sur toute sa longueur des fibres (23) formant des bouclettes protubérantes, le matériau composite est réalisé en bobinant le fil sur un mandrin (47) et en imprégnant le fil bobiné de matrice organique (42), de façon à former une préforme bobinée (41) imprégnée de matrice organique présentant la géométrie finale voulue; la préforme bobinée étant ensuite réticulée en étuve de façon à former le matériau composite (12) final; le bobinage de la préforme étant réalisé de façon à ce que, compte tenu de la composition de la matrice organique (42) et de la nature et de la constitution du fil (21) formant le renfort fibreux,
la matrice organique et le renfort fibreux sont présents dans les proportions volumiques suivantes:
- entre 65% et 75% de matrice organique,
- entre 25% et 35% de renforts fibreux

2. Matériau composite selon la revendication 1, **caractérisée en ce que** le renfort fibreux (21) est constitué de fibres de silice (SiO2) ou de carbure de silicium (SiC).

3. Matériau composite selon l'une des revendications 1 ou 2, **caractérisée en ce que** le renfort fibreux (21) en silice présente un nombre de bouclettes (23) par mètre linéaire compris entre 140 et 200.

4. Matériau composite selon l'une quelconque des revendications 1 à 3, **caractérisée en ce que** les bouclettes (21) du renfort fibreux (21) présentent un diamètre moyen de 5 mm.

5. Matériau composite selon l'une quelconque des revendications 1 à 4, **caractérisée en ce que** la matrice organique chargée (42) est un mélange comportant une résine phénolique aqueuse et des particules réfractaires; les proportions massiques entre la résine phénolique et les charges réfractaires étant comprises dans les plages suivantes:
- 40 à 60% de résine phénolique;
- 60 à 40% de charges réfractaires.

6. Matériau composite selon la revendication 5, **caractérisée en ce que** la matrice organique chargée (42) comporte, en masse, 50% de résine phénolique et 50% de charge réfractaire.

7. Matériau composite selon l'une des revendications 5 ou 6, **caractérisée en ce que** la résine phénolique est une résine liquide de type Résol.

8. Matériau composite selon la revendication 7, **caractérisée en ce que** les charges réfractaires sont constituées de carbure de silicium.

9. Matériau composite selon la revendication 8, **caractérisée en ce que** les charges réfractaires en carbure de silicium sont de forme sensiblement sphérique et présentent un diamètre médian compris entre 12 µm et 20 µm.

10. Matériau composite selon l'une des revendications 8 ou 9, **caractérisée en ce que** le carbure de silicium comporte du bore en tant qu'agent fondant.

11. Matériau composite selon l'une quelconque des revendications 1 à 4, **caractérisée en ce que** la matrice organique chargée (42) est un mélange comportant une résine et des particules réfractaires, la résine étant une huile silicone dont le mode de polymérisation est du type poly addition.

12. Un procédé pour fabriquer un élément de matériau composite (12) selon l'une des revendications 1 à 11, l'élément ayant une forme définie par un mandrin tubulaire (47), les outillages et les
matières premières étant préalablement portés à une température ambiante comprise entre 20°C et 30°C, le procédé comportant principalement les étapes suivantes :
- une première étape (31) de réalisation du mélange, ou "barbotine", entre la résine et la charge réfractaire, le mélange étant réalisé à la température ambiante,
- une deuxième étape (32) d'enroulement filamentaire, étape au cours de laquelle le renfort fibreux de structure filaire présentant sur toute sa longueur des fibres formant des bouclettes protubérantes est bobiné, suivant un cycle de bobinage préétabli, sur le mandrin (47) en rotation pendant qu'il est imprégné de la "barbotine" (42), la dépose de la "barbotine" (42) se faisant de manière continue; l'enroulement, réalisé à la température ambiante, produisant une préforme en fil bobiné (41) imprégnée de barbotine;.
- une troisième étape (33) de réticulation de la préforme imprégnée de "barbotine" (41), la réticulation étant réalisée suivant un enchainement de différents paliers thermiques de valeurs croissantes; la troisième étape étant terminée par une phase (55), durant laquelle on laisse le matériau réticulé retourner de lui-même à la température ambiante;
- une quatrième étape (34) d'usinage à sec permettant à la fois de libérer la pièce réticulée du mandrin (47) et d'obtenir les dimensions voulues pour l'élément de matériau composite (12, 72).

13. Procédé selon la revendication 12, **caractérisé en ce que**, avant mise en œuvre de la première étape (31), les outillages et les matières premières sont portés à la température ambiante et maintenus à cette température pendant une durée de stabilisation minimale d'environ 20 heures.

14. Procédé selon l'une des revendications 12 ou 13, **caractérisé en ce que** la première étape (31) met en œuvre un mélangeur turbine configuré pour obtenir un mélange résine-charges réfractaires dont la viscosité brookfield est comprise sur entre 8000mPas et 11000mPa·s.

15. Procédé selon l'une quelconque des revendications 12 à 14, **caractérisé en ce que**, au cours de la deuxième étape (32), la dépose de la "barbotine" (42) sur le renfort filaire (21) bobiné est réalisée de manière continue et de manière excédentaire au moyen d'une pompe péristaltique (44) raccordée à un réservoir (43) contenant la "barbotine" (42) préparée.

16. Procédé selon la revendication 15, **caractérisé en ce que** l'étalement de la "barbotine" (42) à la surface du renfort filaire (21) bobiné est associée à l'application d'une légère pression au moyen d'un pinceau.

17. Procédé selon les revendications 12 à 16, **caractérisé en ce que** la deuxième étape (32) d'enroulement filamentaire comporte les opérations préalables suivantes:
- Préparation de la bobineuse et positionnement du mandrin (47) et des bobines de renfort fibreux (48, 49);
- réglage de la tension fil (21) formant le renfort fibreux, à une valeur permettant d'assurer l'essorage du renfort filaire en cours de bobinage de façon à évacuer la barbotine déposée en excès sur le renfort filaire, sans risquer de rompre le renfort filaire;
- réglage de la vitesse maximale de bobinage à une valeur permettant une imprégnation complète du renfort (21) bobiné par la "barbotine" (42).

18. Procédé selon la revendication 15, **caractérisé en ce que** la tension appliquée au renfort filaire (21) est comprise entre 1,4 et 1,8 DaN, et que la vitesse de rotation du mandrin (47) est d'environ 32 tours par minute.

19. Procédé selon la revendication 18, **caractérisé en ce que** la tension appliquée au renfort filaire (21) est de 1,6 Da.N.

20. Procédé selon la revendication 19, **caractérisé en ce que** l'excédant de "barbotine" (42) récupéré par l'essorage consécutif à la tension appliquée au fil (21) constituant le renfort filaire est réintroduit dans le réservoir de "barbotine" (43)

21. Procédé selon l'une quelconque des revendications 12 à 20, **caractérisé en ce que** la troisième étape (33) de réticulation en température de la préforme filaire (41), est réalisée selon le cycle suivant:
- application d'une première rampe de température (51) comprise entre 20°C ^{± 5°C} et 60°C^{± 5°C} durant les 2 premières heures ^{± 5 min};
- application d'une seconde rampe de température (52) comprise entre 60°C ^{± 5°C} et 120°C ^{± 5°C} durant les 42 heures ^{± 5 min} suivantes;
- application d'une troisième rampe de température (53) comprise entre 120°C ^{± 5°C} et 140°C ^{± 5°C} sur une durée de 23 heures ^{± 5 min};
- maintien (54) durant 2 heures ^{± 5 min} à la température de stabilisation de 140°C ^{± 5°C};
- retour (55) à la température ambiante suivant le cycle d'inertie naturelle du matériau;
la troisième étape (33) étant réalisée alors que la préforme filaire est maintenue en rotation.

22. Procédé selon l'une quelconque des revendications 12 à 21, **caractérisé en ce qu'**il comporte une étape complémentaire de surbobinage.

23. Procédé selon la revendication 22, **caractérisé en ce que** le matériau surbobiné employé est constitué d'un fil de fibres organiques, pré-imprégné d'une résine chimiquement compatible de celle employée pour la réalisation du matériau composite proprement dit.

24. Procédé selon la revendication 23, **caractérisé en ce que** le matériau surbobiné employé est constitué d'un fil de fibres de carbone, pré-imprégné d'une résine phénolique.

## Patentansprüche

1. Verbundmaterial (12), gebildet durch Vernetzen einer organischen duroplastischen Matrix, imprägniert in einer Bewehrung, die durch Mineralfasern oder Keramikfasern gebildet wird, wobei die Matrix mehrheitlich aus einem flüssigen Harz gebildet ist, dem feuerfeste Bewehrungsladungen zugesetzt werden,
**dadurch gekennzeichnet, dass** die Faserverstärkung aus einem Faden (21) gebildet wird, der über seine ganze Länge Fasern (23) aufweist, die vorstehende Schlaufen bilden, wobei das Verbundmaterial durch Wickeln des Fadens auf einen Dorn (47) und Imprägnieren des gewickelten Fadens mit einer organischen Matrix (42) realisiert wird, um eine gewickelte Vorform (41) zu bilden, die mit organischer Matrix imprägniert ist, die die gewünschte Endgeometrie aufweist; wobei die gewickelte Vorform dann in einem Ofen vernetzt wird, um das endgültige Verbundmaterial (12) zu bilden; wobei die Wicklung der Vorform so erfolgt, dass unter Berücksichtigung der Zusammensetzung der organischen Matrix (42) und der Beschaffenheit und Konstitution des Fadens (21), der die Faserverstärkung bildet,
die organische Matrix und die Faserverstärkung in den folgenden Volumenanteilen vorliegen:
- zwischen 65% und 75 % organische Matrix,
- zwischen 25 % und 35 % Faserverstärkung.

2. Verbundmaterial nach Anspruch 1, **dadurch gekennzeichnet, dass** die Faserverstärkung (21) aus Siliciumdioxidfasern (SiO₂) oder aus Siliciumcarbidfasern (SiC) gebildet ist.

3. Verbundmaterial nach Anspruch 1 oder 2, **dadurch gekennzeichnet, dass** die Faserverstärkung (21) aus Siliciumdioxid eine Anzahl Schlaufen (23) pro Linearmeter zwischen 140 und 200 hat.

4. Verbundmaterial nach einem der Ansprüche 1 bis 3, **dadurch gekennzeichnet, dass** die Schlaufen (21) der Faserverstärkung (21) einen mittleren Durchmesser von 5 mm haben.

5. Verbundmaterial nach einem der Ansprüche 1 bis 4, **dadurch gekennzeichnet, dass** die beladene organische Matrix (42) eine Mischung ist, die ein wässriges Phenolharz und feuerfeste Partikel umfasst; wobei die Masseanteile zwischen dem Phenolharz und den feuerfesten Partikeln innerhalb der folgenden Bereiche liegen:
- 40 bis 60 % Phenolharz;
- 60 bis 40 % feuerfeste Ladungen.

6. Verbundmaterial nach Anspruch 5, **dadurch gekennzeichnet, dass** die beladene organische Matrix (42), nach Masse, 50 % Phenolharz und 50 % feuerfeste Ladung umfasst.

7. Verbundmaterial nach Anspruch 5 oder 6, **dadurch gekennzeichnet, dass** das Phenolharz ein flüssiges Harz des Resoltyps ist.

8. Verbundmaterial nach Anspruch 7, **dadurch gekennzeichnet, dass** die feuerfesten Ladungen aus Siliciumcarbid gebildet sind.

9. Verbundmaterial nach Anspruch 8, **dadurch gekennzeichnet, dass** die feuerfesten Ladungen aus Siliciumcarbid eine im Wesentlichen sphärische Form und einen mittleren Durchmesser zwischen 12 µm und 20 µm haben.

10. Verbundmaterial nach Anspruch 8 oder 9, **dadurch gekennzeichnet, dass** das Siliciumcarbid Bor als Schmelzmittel enthält.

11. Verbundmaterial nach einem der Ansprüche 1 bis 4, **dadurch gekennzeichnet, dass** die beladene organische Matrix (42) ein Gemisch ist, das ein Harz und feuerfeste Partikel umfasst, wobei das Harz ein Silikonöl ist, dessen Polymerisationsmodus vom Polyadditionstyp ist.

12. Verfahren zur Herstellung eines Elements aus Verbundmaterial (12) nach einem der Ansprüche 1 bis 11, wobei das Element eine durch einen rohrförmigen Dorn (47) definierte Form hat, wobei die Werkzeuge und die Primärmassen zuvor auf eine Umgebungstemperatur zwischen 20°C und 30°C gebracht werden, wobei das Verfahren im Wesentlichen die folgenden Schritte beinhaltet:
- einen ersten Schritt (31) des Herstellens des Gemischs, oder "Schlickers", zwischen dem Harz und der feuerfesten Ladung, wobei das Gemisch bei Umgebungstemperatur realisiert wird,
- einen zweiten Schritt (32) des Fadenwickelns, in dessen Verlauf die Faserverstärkung der Fadenstruktur, die über ihre gesamte Länge Fasern aufweist, die vorstehende Schlaufen bilden, gemäß einem zuvor eingerichteten Wickelzyklus auf den Dorn (47) gewickelt wird, während er mit "Schlicker" (42) imprägniert ist, wobei das Absetzen von "Schlicker" (42) auf kontinuierliche Weise erfolgt; wobei die Wicklung, die bei Umgebungstemperatur erfolgt, eine mit Schlicker imprägnierte gewickelte Fadenvorform (41) erzeugt;
- einen dritten Schritt (33) des Vernetzens der mit "Schlicker" imprägnierten Vorform (41), wobei die Vernetzung gemäß einer Verkettung von unterschiedlichen thermischen Stufen mit aufsteigenden Werten erfolgt; wobei der dritte Schritt durch eine Phase (55) beendet wird, während der das vernetzte Material selbst auf Umgebungstemperatur zurückkehren gelassen wird;
- einen vierten Schritt (34) des Trockenverarbeitens, der gleichzeitig das Freisetzen des vernetzten Stücks vom Dorn (47) und das Erhalten der gewünschten Abmessungen für das Element des Verbundmaterials (12, 72) zulässt.

13. Verfahren nach Anspruch 12, **dadurch gekennzeichnet, dass** vor dem Durchführen des ersten Schritts (31) die Werkzeuge und die Primärmassen auf Umgebungstemperatur gebracht und für eine Mindeststabilisierungsdauer von etwa 20 Stunden darauf gehalten werden.

14. Verfahren nach Anspruch 12 oder 13, **dadurch gekennzeichnet, dass** der erste Schritt (31) einen Turbinenmischer verwendet, um ein Gemisch aus Harz und feuerfesten Ladungen zu erhalten, dessen Brookfield-Viskosität im Bereich zwischen 8000 mPa·s und 11 000 mPa·s liegt.

15. Verfahren nach einem der Ansprüche 12 bis 14, **dadurch gekennzeichnet, dass** im Laufe des zweiten Schritts (32) das Absetzen von "Schlicker" (42) auf die gewickelte Fadenverstärkung (21) auf kontinuierliche Weise und im Übermaß mittels einer peristaltischen Pumpe (44) erfolgt, die an ein Reservoir (43) angeschlossen ist, das das hergestellte "Schlicker" (42) enthält.

16. Verfahren nach Anspruch 15, **dadurch gekennzeichnet, dass** die Ausbreitung des "Schlickers" (42) auf der Oberfläche der gewickelten Fadenverstärkung (21) mit der Anwendung eines leichten Drucks mittels einer Pinzette assoziiert ist.

17. Verfahren gemäß den Ansprüchen 12 bis 16, **dadurch gekennzeichnet, dass** der zweite Schritt (32) des Fadenwickelns die folgenden Voraboperationen beinhaltet:
- Vorbereiten des Wicklers und Positionieren des Dorns (47) und der Faserverstärkungsbobinen (48, 49);
- Regeln der Fadenspannung (21) zum Bilden der Faserverstärkung auf einen Wert, der das Schleudern der Fadenverstärkung während des Wickelns gewährleistet, um das im Überschuss auf der Fadenverstärkung abgesetzte Schlicker zu evakuieren, ohne ein Brechen der Fadenverstärkung zu riskieren;
- Regeln der maximalen Wickelgeschwindigkeit auf einen Wert, der eine vollständige Imprägnierung der gewickelten Verstärkung (21) mit dem "Schlicker" (42) zulässt.

18. Verfahren nach Anspruch 15, **dadurch gekennzeichnet, dass** die auf die Fadenverstärkung (21) angewendete Spannung zwischen 1,4 und 1,8 DaN liegt und die Drehzahl des Dorns (47) bei etwa 32 Umdrehungen pro Minute liegt.

19. Verfahren nach Anspruch 18, **dadurch gekennzeichnet, dass** die auf die Fadenverstärkung (21) aufgebrachte Spannung 1,6 Da·N beträgt.

20. Verfahren nach Anspruch 19, **dadurch gekennzeichnet, dass** der "Schlicker"-Überschuss (42), der durch das Schleudern nach dem Anwenden der Spannung auf den Faserverstärkung bildenden Faden (21) zurückgewonnen wird, in das "Schlicker"-Reservoir (43) zurückgeführt wird.

21. Verfahren nach einem der Ansprüche 12 bis 20, **dadurch gekennzeichnet, dass** der dritte Schritt (33) des Temperaturvernetzens der Faservorform (41) gemäß dem folgenden Zyklus durchgeführt wird:
- Anwenden einer ersten Temperaturrampe (51) zwischen 20°C± 5°C und 60°C± 5°C für die ersten 2 Stunden± 5 min;
- Anwenden einer zweiten Temperaturrampe (52) zwischen 60°C± 5°C und 120°C± 5°C für die 42 nachfolgenden Stunden± 5 min;
- Anwenden einer dritten Temperaturrampe (53) zwischen 120°C± 5°C und 140°C± 5°C für eine Dauer von 23 Stunden± 5 min;
- Halten (54) für 2 Stunden± 5 min auf der Stabilisierungstemperatur von 140°C ± 5°C;
- Zurückführen (55) auf die Umgebungstemperatur gemäß dem natürlichen Trägheitszyklus des Materials;
wobei der dritte Schritt (33) durchgeführt wird, während die Fadenvorform fortwährend rotiert.

22. Verfahren nach einem der Ansprüche 12 bis 21, **dadurch gekennzeichnet, dass** es einen komplementären Überwicklungsschritt umfasst.

23. Verfahren nach Anspruch 22, **dadurch gekennzeichnet, dass** das benutzte überwickelte Material aus einem Faden aus organischen Fasern gebildet ist, der mit einem Harz vorimprägniert ist, das chemisch damit verträglich ist, eingesetzt zur Herstellung des Verbundmaterials selbst.

24. Verfahren nach Anspruch 23, **dadurch gekennzeichnet, dass** das eingesetzte überwickelte Material von einem Kohlenstofffaserfaden gebildet wird, der mit einem Phenolharz vorimprägniert ist.

## Claims

1. A composite material (12) formed by crosslinking a thermosetting organic matrix impregnated into a reinforcement composed of mineral fibers or ceramic fibers, the matrix being predominantly composed of a liquid resin to which refractory reinforcing fillers are added,
**characterized in that** the fibrous reinforcement is composed of a yarn (21) exhibiting, over its entire length, fibers (23) forming protruding loops, the composite material is produced by winding the yarn onto a mandrel (47) and by impregnating the wound yarn with organic matrix (42), so as to form a wound preform (41) impregnated with organic matrix exhibiting the desired final geometry; the wound preform subsequently being crosslinked in an oven so as to form the final composite material (12); the winding of the preform being carried out so that, in view of the composition of the organic matrix (42) and of the nature and constitution of the yarn (21) forming the fibrous reinforcement,
the organic matrix and the fibrous reinforcement are present in the following proportions by volume:
- between 65% and 75% of organic matrix,
- between 25% and 35% of fibrous reinforcements.

2. The composite material according to claim 1, **characterized in that** the fibrous reinforcement (21) is composed of silica (SiO₂) or silicon carbide (SiC) fibers.

3. The composite material according to any of claims 1 or 2, **characterized in that** the fibrous reinforcement (21) made of silica exhibits a number of loops (23) per linear meter of between 140 and 200.

4. The composite material according to any of claims 1 to 3, **characterized in that** the loops (21) of the fibrous reinforcement (21) exhibit a mean diameter of 5 mm.

5. The composite material according to any of claims 1 to 4, **characterized in that** the filler-comprising organic matrix (42) is a mixture comprising an aqueous phenolic resin and refractory particles; the proportions by mass between the phenolic resin and the refractory fillers being within the following ranges:
- 40 to 60% of phenolic resin;
- 60 to 40% of refractory fillers.

6. The composite material according to claim 5, **characterized in that** the filler-comprising organic matrix (42) comprises, by mass, 50% of phenolic resin and 50% of refractory filler.

7. The composite material according to any of claims 5 and 6, **characterized in that** the phenolic resin is a liquid resin of resol type.

8. The composite material according to claim 7, **characterized in that** the refractory fillers are composed of silicon carbide.

9. The composite material according to claim 8, **characterized in that** the refractory fillers made of silicon carbide are of substantially spherical shape and exhibit a median diameter of between 12 µm and 20 µm.

10. The composite material according to any of claims 8 or 9, **characterized in that** the silicon carbide comprises boron as flux.

11. The composite material according to any of claims 1 to 4, **characterized in that** the filler-comprising organic matrix (42) is a mixture comprising a resin and refractory particles, the resin being a silicone oil for which the method of polymerization is of the polyaddition type.

12. A process for manufacturing a composite material component (12) according to any of claims 1 to 11, the component having a form defined by a tubular mandrel (47), the machinery and starting materials being brought beforehand to an ambient temperature of between 20°C and 30°C, the process comprising mainly the following stages:
- a first stage (31) of producing the mixture, or "slip", between the resin and the refractory filler, the mixture being produced at ambient temperature;
- a second stage (32) of filament winding, during which step the fibrous reinforcement of yarn structure, exhibiting, over its entire length, fibers forming protruding loops, is wound, according to a preestablished winding cycle, onto the rotating mandrel (47) while it is impregnated with the "slip" (42), the deposition of the "slip" (42) being carried out continuously; the winding, carried out at ambient temperature, producing a preform made of wound yarn (41), which preform is impregnated with slip;
- a third stage (33) of crosslinking the preform impregnated with "slip" (41), the crosslinking being carried out according to a sequence of different temperature steps having increasing values; the third stage being terminated by a phase (55) during which the crosslinked material is allowed to return, of its own accord, to ambient temperature;
- a fourth stage (34) of dry machining which makes it possible both to release the crosslinked part from the mandrel (47) and to obtain the dimensions desired for the composite material component (12, 72).

13. The process according to claim 12, **characterized in that**, before carrying out the first stage (31), the machinery and the starting materials are brought to ambient temperature and are maintained at this temperature for a minimum stabilization time of approximately 20 hours.

14. The process according to any of claims 12 or 13, **characterized in that** the first stage (31) employs a turbine mixer configured in order to obtain a resin/refractory fillers mixture for which the Brookfield viscosity is on between 8000 mPa·s and 11 000 mPa·s.

15. The process according to any of claims 12 to 14, **characterized in that**, during the second stage (32), the deposition of the "slip" (42) on the wound yarn reinforcement (21) is carried out continuously and in excess by means of a peristaltic pump (44) connected to a tank (43) containing the prepared "slip" (42).

16. The process according to claim 15, **characterized in that** the spreading of the "slip" (42) at the surface of the wound yarn reinforcement (21) is associated with the application of a gentle pressure by means of a brush.

17. The process according to claims 12 to 16, **characterized in that** the second stage (32) of filament winding comprises the following preliminary operations:
- preparation of the winder and positioning of the mandrel (47) and spools of fibrous reinforcement (48, 49);
- adjusting the tension yarn (21) forming the fibrous reinforcement, to a value which makes it possible to ensure the draining of the yarn reinforcement during winding so as to remove the slip deposited in excess on the yarn reinforcement, without risk of breaking the yarn reinforcement;
- adjusting the maximum winding rate to a value which makes possible complete impregnation of the wound reinforcement (21) by the "slip" (42).

18. The process according to claim 15, **characterized in that** the tension applied to the yarn reinforcement (21) is between 1.4 and 1.8 daN and that the rotational speed of the mandrel (47) is approximately 32 revolutions per minute.

19. The process according to claim 18, **characterized in that** the tension applied to the yarn reinforcement (21) is 1.6 daN.

20. The process according to claim 19, **characterized in that** the excess "slip" (42) recovered by the draining subsequent to the tension applied to the yarn (21) constituting the yarn reinforcement is reintroduced into the "slip" tank (43).

21. The process according to any of claims 12 to 20, **characterized in that** the third stage (33) of temperature crosslinking the yarn preform (41) is carried out according to the following cycle:
- application of a first temperature gradient (51) of between 20°C ± 5°C and 60°C ± 5°C during the first 2 hours ± 5 min;
- application of a second temperature gradient (52) of between 60°C ± 5°C and 120°C ± 5°C for the following 42 hours ± 5 min;
- application of a third temperature gradient (53) of between 120°C ± 5°C and 140°C ± 5°C over a period of time of 23 hours ± 5 min;
- maintenance (54) at the stabilization temperature of 140°C ± 5°C for 2 hours ± 5 min;
- return (55) to ambient temperature according to the natural inertia cycle of the material;
the third stage (33) being carried out while the yarn preform is kept rotating.

22. The process according to any of claims 12 to 21, **characterized in that** it comprises an additional stage of overwinding.

23. The process according to claim 22, **characterized in that** the overwound material employed is composed of a yarn of organic fibers which is preimpregnated with a resin chemically compatible with that, employed to produce the composite material proper.

24. The process as claimed in claim 23, **characterized in that** the overwound material employed is composed of a yarn of carbon fibers which is preimpregnated with a phenolic resin.
